# EUROPÄISCHE PATENTSCHRIFT

(11) **EP 2 379 432 B1**
(45) Veröffentlichungstag und Bekanntmachung des Hinweises auf die Patenterteilung: **29.08.2012**
(21) Anmeldenummer: 10771656.5
(22) Anmeldetag: 15.10.2010
(51) Int. Cl.: B65G 47/84

(54) **BEHÄLTERKLAMMER BZW. -CLIP**
CONTAINER CLAMP OR CLIP
PINCE OU CLIP POUR CONTENANT

(30) Priorität: 22.10.2009 DE 102009050393
(43) Veröffentlichungstag der Anmeldung: 26.10.2011
(73) Patentinhaber: KHS GmbH, 44143 Dortmund (DE)
(72) Erfinder: BODTLÄNDER, Renate, 55452 Guldental (DE); FAHLDIECK, Andreas, 55743 Idar-Oberstein (DE)
(86) Internationale Anmeldenummer: PCT/EP2010/006313
(87) Internationale Veröffentlichungsnummer: WO 2011/047808

(56) Entgegenhaltungen:
- WO-A1-03/068643
- DE-A1-102006 012 020

## Beschreibung

Die Erfindung richtet sich auf ein Förderelement mit einem Behälterklammer bzw. -clip.

Behälterklammern in derartigen Behälterabfüllanlagen sind in sehr unterschiedlichen konstruktiven Gestaltungen bekannt, sei es als passive Greifelement oder als aktive Klammern, etwa zum Ergreifen eines Halses von PET-Flaschen, wobei die Erfindung nicht auf diese besondere Anwendung beschränkt ist. Zum Stand der Technik seien lediglich als Beispiel die DE 10 2008 019 766 B3, DE 10 2005 032 175 A1, DE 20 2005 002 470 U1, DE 20 2006 004 641 U1 oder die DE 20 2006 018 379 U1 genannt, die einige Behälterklammer- bzw. -clipskonstruktionen zeigen.

Die WO 03/068643 A1 offenbart ein Förderelement gemäß dem Oberbegriff des Anspruchs 1.

Es gibt Anwendungsfälle, bei denen es möglich ist, z.B. bei direkt verblockten Anlagen (Blasmaschine übergibt über mehrere Sterne hinweg Flaschen ohne Pufferstrecke in den Füller), dass es aufgrund von Toleranzen zu einer ungenauen Flaschenübergabe kommen kann, z.B. hervorgerufen durch asynchron laufende Sterne. Je nach Übergabesituation können so starke Kräfte bei Fehlübergabe auftreten, dass es zu Beschädigungen der Anlage kommt, nicht nur, dass die einzelnen Greifer zerstört werden, es kann auch zu größeren Schäden an der Gesamtanlage im Übergabebereich kommen.

Hier setzt die Erfindung an, deren Aufgabe darin besteht, derartige Anlagen durch besondere Klammerkonstruktionen so zu schützen, dass allenfalls der Ausfall einer einzigen Klammer zu beklagen ist, es ansonsten aber nicht zu einer Beschädigung der Anlage kommt.

Mit einer Behälterklammer bzw. -clip der eingangs bezeichneten Art wird die Aufgabe gemäß der Erfindung durch die Merkmale des Anspruchs 1 gelöst. Der Lagerblock bzw. die Behälterklammer oder -clip wird dabei am Förderelement gehalten, so dass die Flasche nicht unkontrolliert herausgeschleudert wird, nach dem teilweise Lösen.

Mit dieser Sicherungseinrichtung wird erreicht, dass bei Fehlern im System durch entweder zu große Schwenkbereiche oder zu große Krafteinwirkung die einzelne Klammer freigegeben wird und aus Eingriffsposition herausschwenken kann, ohne dass die Gesamtanlage Schaden nimmt.

Ausgestaltungen der Erfindung nach Anspruch 1 ergeben sich aus den Unteransprüchen. So besteht eine zweckmäßige konstruktive Gestaltung darin, dass die Lager- und Haltevorrichtung mindestens ein Lagerelement und mindestens ein, insbesondere zwei Halteelemente umfasst, wobei das wenigstens eine Lagerelement und das wenigstens eine Halteelement in Form von Stegen und Bolzen ausgeformt sein können.

Eine der möglichen Ausgestaltungen der Fixierung des die Behälterklammer bzw. -clip aufweisenden Lagerblockes besteht erfindungsgemäß darin, dass die Lagerung dieses Blockes in Art eines Bajonettverschlusses ausgebildet sein kann. Durch diese Gestaltung ist es möglich, dass bei Überschreiten eines bestimmten Drehwinkels bajonettartig der Lagerblock freigegeben wird seitlich Verschwenken kann, ohne dass der Rest der Anlage Schaden nimmt.

Eine sehr zweckmäßige Ausgestaltung der Erfindung besteht darin, dass der Lagerblock mit angeformten Armen versehen ist, die jeweils mit einem Fixierelement je an einem weiteren Bolzen fixiert sind, wobei die angeformten Arme elastisch verformbar bei Überschreiten eines seitlichen Schwenkbereiches über eine Sollbruchstelle abknicken und der Lagerblock an einem Bolzen magnetisch gehalten wird.

Eine Variante der Ausgestaltung der Behälterklammer nach der Erfindung besteht darin, dass die Länge wenigstens des in Bewegungsrichtung vorne liegenden Armes am Lagerblock so bemessen ist, dass bei Aufbringung eines seitlichen Druckes der Arm am Fixierbolzen vorbeigleitet und vom Fixierbolzen zur Freigabe des Blockes abspringt. Dabei ist es zweckmäßig, wenn beide Arme eine das Abspringen vom Fixierbolzen ermöglichende Länge aufweisen. Zweckmäßig sind die Arme am Lagerblock aus einem elastisch federnden Material gebildet.

Die Erfindung sieht Förderelemente, die als umlaufend angetriebener Transportstern ausgebildet sind.

Weitere Merkmale, Einzelheiten und Vorteile der Erfindung ergeben sich aufgrund der nachfolgenden Beschreibung sowie anhand der Zeichnung. Diese zeigt in
Fig. 1 eine Unteransicht im Ausschnitt eines Sternes mit drei Klammern in unterschiedlichen Schwenkpositionen,
Fig. 2 eine räumliche Darstellung des Ausschnittes gemäß Fig. 1 sowie in
Fig. 3 eine räumliche Unteransicht unter den Stern gemäß Fig. 2.
Fig. 4 zeigt in einem Ausschnitt und Teilschnitt die Haltevorrichtung

Ein allgemein mit 1 bezeichneter Transportstern einer Flaschenabfüllanlage ist mit einer Mehrzahl von Behälterklammern bzw. -clipsen ausgerüstet, wobei in den Figuren jeweils nur drei Klammern 2 dargestellt sind.

Die Klammern 2 weisen einen allgemein mit 3 bezeichneten Lagerblock auf, welcher an einem Lagerzapfen 4, der fester Bestandteil des Transportsternes 1 darstellt, drehbar gelagert ist. Neben den beiden Klammerarmen 5 und 6, die schwenkbar am Lagerblock 3 positioniert sind, und in den dargestellten Beispielen mittels einer Zugfeder 7 zusammengehalten werden, weist der Lagerblock 3 noch zwei außen angeformte, als Arme 8 und 9 ausgebildete Lagerelemente auf, die, vom Lagerblock 3 ausgehend, sich in Richtung der Eingriffsöffnung der Klammerarme 5 und 6 erstrecken.

Diese Lagerarme ruhen in der Normallage auf tellerartigen Lagerelementen 10, die an ebenfalls am Stern 1 ortsfest befestigten Halteelementen 11 angebracht sind, derart, dass die Klammern 2 so unterhalb des Tellers des Sternes gehalten sind.

Um die Klammern auswechseln zu können, bedarf es lediglich des Zusammendrückens der beiden Arme 8 und 9, um dann die Klammer nach unten vom Lagerzapfen 4 abziehen zu können.

Diese Montageart macht sich die Erfindung zunutze, um bei Überschreiten gewisser Beanspruchung der Klammern 2 ein automatisches seitliches Verschwenken der jeweiligen Klammer am Transportstern 1 zu bewirken.

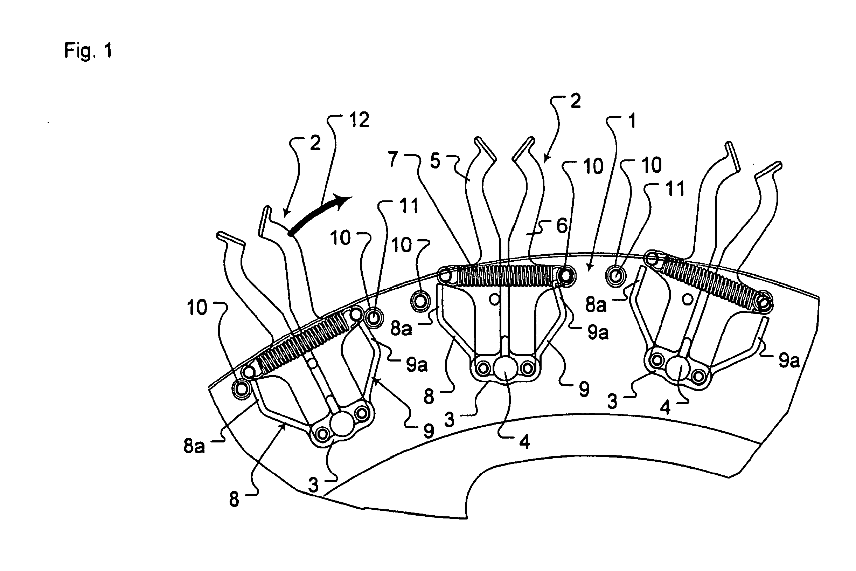

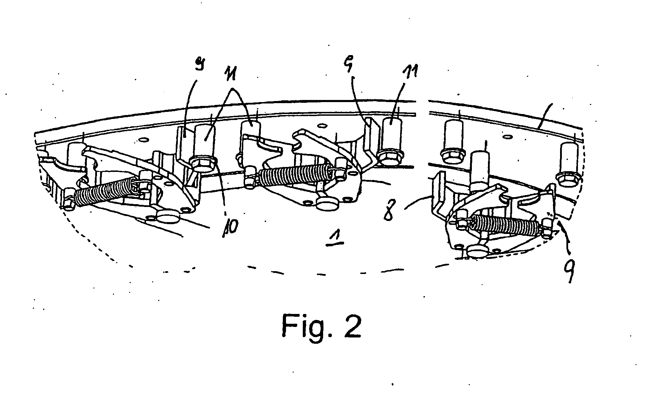

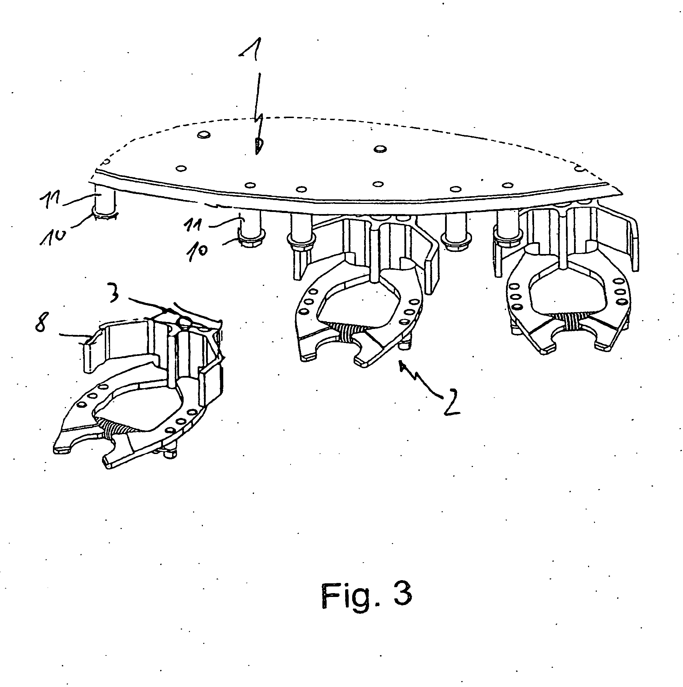

Wie sich z.B. aus Fig. 1 ergibt, ruhen zunächst die freien Enden 8a und 9a der Arme 8 und 9 auf den Lagerelementen 10 an den jeweiligen Halteelementen 11 und halten die Klammer 2 in Position. Wird nun eine Kraft etwa in Richtung des Pfeiles 12 in Fig. 1 auf die Klammer 2 ausgeübt, so verschwenkt sie im Lagerzapfen 4 in der Weise, dass zunächst das freie Ende 8a des Armes 8 sich von dem Lagerelement 10 löst, der das freie Ende 9a des gegenüberliegenden Armes 9 ist noch in Kontakt mit dem zugeordneten Lagerelement 10. Wird die Kraft weiterhin ausgeübt, ergibt sich die in Fig. 1 rechte Position der jeweiligen Klammer, d.h. beide freien Ende 8a und 9a der Arme 8 bzw. 9 lösen sich vom Lagerelement 10, indem sie am zugeordneten Halteelement 11 vorbeigeglitten sind und geben so die Klammer 2 einschließlich Lagerblock 3 frei, was in den Fig. 2 und 3 angedeutet ist.

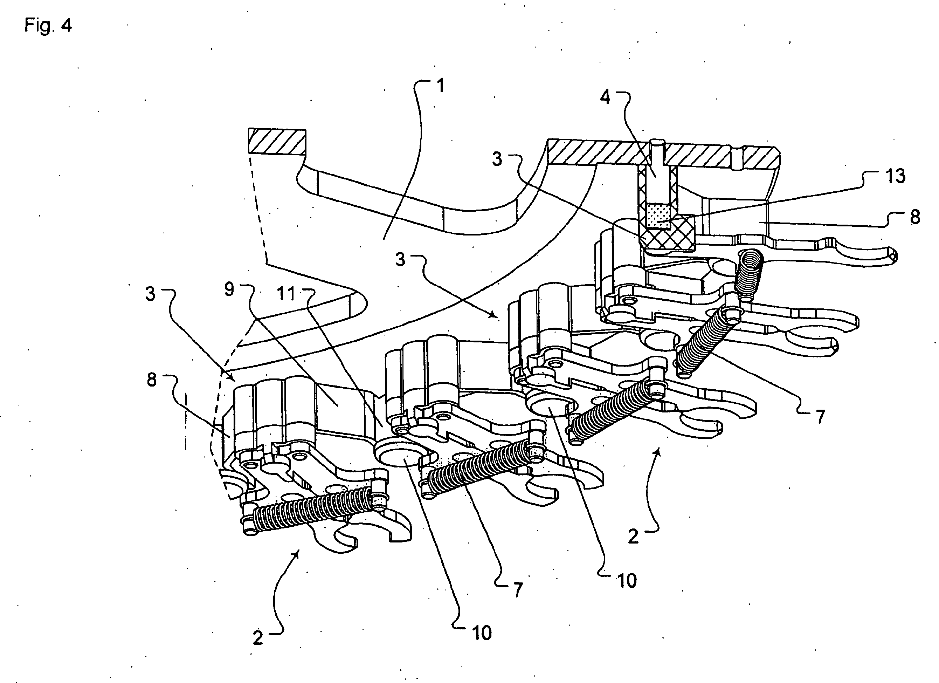

Figur 4 zeig die Sicherung der Klammer 2 bzw. des Lagerblockes 3. Die in Figur 4 gezeigten und nachstehend nicht einzeln aufgeführten Elemente mit ihren Bezugszeichen, haben die identische Benennung und Bedeutung, wie bereits im Zusammenhang mit der Beschreibung der Figuren 1-3 genannt. Wie in Figur 4 gezeigt ist der Lagerzapfen 4 in dem Transportstern 1 befestigt, und besteht aus einem magnetisierbaren Werkstoff, in der Regel ein magnetisierbarer Stahl- oder Eisenwerkstoff. In dem Lagerblock 3 ist ein Permanentmagnet als magnetisches Element 13 eingeklebt oder eingeklemmt, welcher mit dem magnetisierbaren Lagerzapfen 4 zusammenwirkt und diesen am Stern 1 hält.

Die Haltekraft des Permanentmagneten ist so gewählt, dass auch nach dem Verschwenken bei seitlicher Überlast, die Behälterklammer 2 mit einer im Eingriff befindlichen Flasche sicher gehalten wird. Es ist natürlich verständlich, dass auch der Lagerzapfen 4 ganz oder teilweise aus einem magnetischen Werkstoff gebildet sein kann und im Lagerblock 3 eine magnetisierbarer Stahl- oder Eisenwerkstoff angeordnet sein kann oder zwei Magnete so am Lagerzapfen 4 und im Lagerblock 3 angeordnet sind, dass diese in analoger Weise zusammenwirken.

Natürlich ist das beschrieben Ausführungsbeispiel der Erfindung noch in vielfacher Hinsicht abzuändern, ohne den Grundgedanken zu verlassen. So ist die Erfindung insbesondere nicht auf eine bestimmte Form der Klammern 2 beschränkt, insbesondere auch nicht darauf, ob diese mit Federn ausgerüstet ist oder die Klemmkraft allein aufgrund ihrer Elastizität ausüben kann, die Art der Halteelement 11 und die Gestaltung der entsprechenden Lagerelement 10 zur Fixierung der freien Enden 8a und 9a der Arme 8 und 9 können anders gestaltet sein, etwa als einstückig an Bolzen angeformte Stege u. dgl. mehr.

## Patentansprüche

1. Förderelement, beispielsweise ein Transportstern (1), in Behälterabfüllanlagen mit Lager- und Haltevorrichtung (10, 11), sowie Behalterklammer (2) bzw. -clip zur Aufnahme des Halses eines Behälters, insbesondere einer Flasche, wobei jede Klammer (2) bzw. Clip einen Lagerblock (3) aufweist, welcher an der Unterseite des Förderelementes an der dort vorgesehenen Lager- und Haltevorrichtung (10,11) gehalten wird, und an einem Lagerzapfen (4) dreh- bzw. schwenkbar gelagert ist, wobei der Lagerblock (3) Halteelemente (8,9) aufweist, die beim Überschreiten eines seitlichen Schwenkbereiches bzw. einer seitlichen Kraftelnwirkung sich mindestens teilweise von der Lager- und Haltevorrichtung (10,11) lösen, wobei der Lagerblock (3) bzw. die Behälterklammer (2) oder -clip zum seitlichen Verschwenken freigegeben wird, **dadurch gekennzeichnet, dass** der Lagerblock mittels mindestens eines magnetischen Elements (13) an dem Lagerzapfen (4) vor dem Herabfallen gehalten wird.

2. Förderelement nach Anspruch 1, **dadurch gekennzeichnet, dass** der Lagerzapfen (4)aus einem magnetischen Material, insbesondere einem magnetischem Stahl besteht und in dem Lagerblock (3), dem freien Ende des Lagerzapfens (4) gegenüber, ein Permanentmagnet angeordnet ist.

3. Förderelement nach Anspruch 1 oder 2, **dadurch gekennzeichnet, dass** das die Lager- und Haltevorrichtung mindestens ein Lagerelement (10) und mindestens ein oder zwei Halteelemente (11) umfasst.

4. Förderelement nach einem der Ansprüche 1 bis 3, **dadurch gekennzeichnet, dass** das mindestens eine Lagerelement (10) in Form eines Stegs und mindestens eine Halteelement (11) in Form eines Bolzens ausgeformt ist.

5. Förderelement nach Anspruch 1 oder 2, **dadurch gekennzeichnet, dass** die Lagerung des Lagerblockes (3) in Art eines Bajonettverschlusses ausgebildet ist.

6. Förderelement nach einem der vorangehenden Ansprüche, **dadurch gekennzeichnet, dass** der Lagerblock (3) der/des Behälterklammer (2) bzw. -clip mit angeformten Armen (8,9) versehen ist, die jeweils von einem Lagerelement (10) je an einem weiteren Halteelement (11) fixiert sind, wobei die angeformten Arme (8,9) elastisch verformbar bei Überschreiten eines seitlichen Schwenkbereiches über eine Sollbruchstelle abknicken und den Lagerblock (3) zum seitlichen Verschwenken am Lagerzapfens (4) freigeben.

7. Förderelement nach einem der vorangehenden Ansprüche, **dadurch gekennzeichnet, dass** die Länge wenigstens des In Bewegungsrichtung vorne liegenden Armes (8,9) am Lagerblock (3) so bemessen ist, dass bei Aufbringung eines seitlichen Druckes der Arm am Halteelemente (11) mit Haltesteg (10) vorbeigleitet und vom Halteelemente (11) zum seitlichen Verschwenken des Lagerblockes (3) abspringt.

8. Förderelement nach einem der vorangehenden Ansprüche, **dadurch gekennzeichnet, dass** beide Arme (8,9) eine das Abspringen vom Halteelemente (11) ermöglichende Lange aufweisen.

9. Förderelement nach einem der vorangehenden Ansprüche, **dadurch gekennzeichnet, dass** wenigstens die Arme (8,9) aus einem elastisch federnden Material gebildet sind.

## Claims

1. Conveying element, such as a transport star (1), in container filling systems with bearing and holding device (10, 11), and container clamp (2) or clip to receive the neck of a container, in particular a bottle, each clamp (2) or clip having a bearing block (3) which is held on the underside of the conveying element at the bearing and holding device (10, 11) provided there and rotatably or pivotably supported at a bearing journal (4), wherein the bearing block (3) has holding elements (8, 9) which, in the event of exceeding a lateral pivoting range or a lateral action of force, are at least partially detached from the bearing and holding device (10, 11), the bearing block (3) or the container clamp (2) or clip being released so as to pivot sideways, **characterised in that** the bearing block is held, prior to falling, at least by means of a magnetic element (13) at the bearing journal (4).

2. Conveying element according to claim 1, **characterised in that** the bearing journal (4) consists of a magnetic material, in particular a magnetic steel, and a permanent magnet is arranged, in the bearing block (3), opposite the free end of the bearing journal (4).

3. Conveying element according to claim 1 or 2, **characterised in that** the bearing and holding device comprises at least one bearing element (10) and at least one or two holding element(s) (11).

4. Conveying element according to any one of claims 1 to 3, **characterised in that** the at least one bearing element (10) is shaped as a web and at least one holding element (11) is shaped as a bolt.

5. Conveying element according to claim 1 or 2, **characterised in that** the support of the bearing block (3) is designed as a bayonet closure.

6. Conveying element according to any one of the preceding claims, **characterised in that** the bearing block (3) of the container clamp (2) or clip is provided with integrally formed arms (8, 9) each fixed by a bearing element (10) to a further holding element (11) each, wherein the integrally formed arms (8, 9) break off in an elastically deformable manner, in the event of exceeding a lateral pivoting range, by means of a predetermined breaking point, and release the bearing block (3) so as to pivot sideways at the bearing journal (4).

7. Conveying element according to any one of the preceding claims, **characterised in that** the length of at least the arm (8, 9) that is in front in the direction of movement, at the bearing block (3), is dimensioned such that, when applying a lateral pressure, the arm glides past the holding element (11) with holding web (10) and jumps off the holding element (11) so as to pivot the bearing block (3) sideways.

8. Conveying element according to any one of the preceding claims, **characterised in that** both arms (8, 9) have a length that enables jumping off the holding element (11).

9. Conveying element according to any one of the preceding claims, **characterised in that** at least the arms (8, 9) are formed from an elastically sprung material.

## Revendications

1. Elément de convoyage, par exemple système de transport en étoile (1), dans des installations de remplissage de récipients équipées d'un dispositif de support et de maintien (10, 11), ainsi que pince (2) ou clip pour récipient servant à recevoir le col d'un récipient, en particulier d'une bouteille, chaque pince (2) ou clip présentant un bloc support (3), lequel est maintenu sur le côté inférieur de l'élément de convoyage, sur le dispositif de support et de maintien (10, 11) prévu à cet endroit, et qui est logé de manière à pouvoir tourner ou pivoter sur un tourillon (4), le bloc support (3) présentant des éléments de maintien (11), qui se détachent au moins en partie du dispositif de support et de maintien (10, 11) en cas de dépassement d'une zone de pivotement latérale ou d'une action de force latérale, le bloc support (3) ou la pince (2) ou clip pour récipient étant libérés aux fins du pivotement latéral, **caractérisé en ce que** le bloc support est maintenu sur le tourillon (4) afin de prévenir toute chute au moyen d'au moins un élément magnétique (13).

2. Elément de convoyage selon la revendication 1, **caractérisé en ce que** le tourillon (4) est constitué d'un matériau magnétique, en particulier d'un acier magnétique, et **en ce qu'**un aimant permanent est disposé dans le bloc support (3), à l'opposé de l'extrémité libre du tourillon (4).

3. Elément de convoyage selon la revendication 1 ou 2, **caractérisé en ce que** le dispositif de support et de maintien comporte au moins un élément de support (10) et au moins un ou deux éléments de maintien (11).

4. Elément de convoyage selon l'une quelconque des revendications 1 à 3, **caractérisé en ce que** l'élément de support (10) au moins au nombre de un est réalisé sous la forme d'une traverse, et **en ce qu'**au moins un élément de maintien (11) est réalisé sous la forme d'un goujon.

5. Elément de convoyage selon la revendication 1 ou 2, **caractérisé en ce que** le palier du bloc support (3) est réalisé à la manière d'une fermeture à baïonnette.

6. Elément de convoyage selon l'une quelconque des revendications précédentes, **caractérisé en ce que** le bloc support (3) de la pince (2) ou du clip pour récipient est pourvu de bras formés (8, 9) sur ce dernier, lesquels sont fixés respectivement sur un autre élément de maintien (11) par un élément de support (10), les bras formés (8, 9) sur le bloc support se rompant en pliant sur un point destiné à la rupture de manière déformable élastiquement en cas de dépassement d'une zone de pivotement latérale et libèrent le bloc support (3) aux fins du pivotement latéral au niveau du tourillon (4).

7. Elément de convoyage selon l'une quelconque des revendications précédentes, **caractérisé en ce que** la longueur au moins du bras (8, 9) se trouvant à l'avant dans la direction de déplacement est dimensionnée sur le bloc support (3) de telle manière que lorsqu'une pression est exercée latéralement, le bras coulisse en passant à côté de l'élément de maintien (11) doté d'une traverse de maintien (10) et se détache de l'élément de maintien (11) aux fins du pivotement latéral du bloc support (3).

8. Elément de convoyage selon l'une quelconque des revendications précédentes, **caractérisé en ce que** les deux bras (8, 9) présentent une longueur permettant le détachement de l'élément de maintien (11).

9. Elément de convoyage selon l'une quelconque des revendications précédentes, **caractérisé en ce qu'**au moins les bras (8, 9) sont formés à partir d'un matériau élastique à ressorts.
